(19) Europäisches Patentamt
European Patent Office
Office européen des brevets

(11) EP 3 266 825 B1

(12) EUROPEAN PATENT SPECIFICATION

(45) Date of publication and mention of the grant of the patent:
**09.03.2022 Bulletin 2022/10**

(21) Application number: **16178433.5**

(22) Date of filing: **07.07.2016**

(51) International Patent Classification (IPC):
***C08L 23/20*** *(2006.01)* ***C08F 2/00*** *(2006.01)*
***C09J 123/20*** *(2006.01)* ***C08F 4/659*** *(2006.01)*

(52) Cooperative Patent Classification (CPC):
(C-Sets available)
**C09J 123/20; C08L 23/20;** C08F 4/65912;
C08L 2205/025 (Cont.)

# (54) BUTENE-1 POLYMER COMPOSITION HAVING A HIGH MELT FLOW RATE

BUTEN-1 POLYMERZUSAMMENSETZUNG MIT HOHER SCHMELZFLUSSRATE

COMPOSITION POLYMÈRE BUTÈNE-1 PRÉSENTANT UN INDICE DE FLUIDITÉ ÉLEVÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.01.2018 Bulletin 2018/02**

(73) Proprietor: **Basell Poliolefine Italia S.r.l.**
**20121 Milano (IT)**

(72) Inventors:
- **MARCHINI, Roberta**
  **44122 Ferrara (IT)**
- **SPATARO, STEFANO**
  **44122 Ferrara (IT)**
- **BURGIN, Emanuele**
  **44122 Ferrara (IT)**
- **PICA, Roberta**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 1 477 499** **EP-A1- 2 915 858**
**EP-A2- 0 314 495** **WO-A1-2012/052429**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/08, C08F 2/001;**
**C08F 210/08, C08F 4/65927;**
**C08L 23/20, C08L 23/20;**
**C09J 123/20, C08L 23/20;**
C08F 210/08, C08F 210/16, C08F 2500/08,
C08F 2500/12, C08F 2500/15

## Description

### FIELD OF THE INVENTION

The present disclosure relates to a butene-1 polymer composition having a high melt flow rate, thus a high fluidity in the molten state, comprising a butene-1 copolymer and at least one additional component selected from butene-1 homopolymers and copolymers.

The composition provides good tensile properties, low hardness and a low glass transition temperature, while still retaining a measurable crystallinity.

The present composition has many applications. In particular the present composition can be used in the production of hot-melt adhesives, as a polymer additive to enhance rheological, mechanical and optical properties of polymer compositions, or as a fluidizer for lubricants.

### BACKGROUND OF THE INVENTION

Butene-1 polymers having high melt flow rate are disclosed in the art, in particular in US4833192, EP0314495A2, EP0331410A2, EP1477499A1, WO2006045687 and WO2015074830. These polymers have been used in many application fields, due to their valuable properties (such as chemical inertia, mechanical properties and nontoxicity).

In particular, due to their high fluidity in the molten state and their physical properties, the butene-1 polymers with high melt flow rate have been employed in various kinds of holt-melt formulations and applications.

As explained in EP1477499A1, the hot-melt performance of high melt flow rate butene-1 polymers is influenced, among other properties, by their balance of crystallinity, molecular weights, molecular weight distribution and composition distribution.

On the other hand, depending upon the specific application considered, different profiles of properties can be required. In particular, different adhesion force values, temperature resistance, melt viscosity and open times can be required.

The open time is defined as the longest time that an adhesive material remains capable of adhesion after it has been cooled from the melt to room temperature and, as explained EP0331410A2 and EP0314495A2, is influenced by the polymer crystallinity and crystallization time.

It has now been found that by combining at least two butene-1 polymers with different and specific comonomer contents, selected from butene-1 homopolymers and copolymers, it is possible to obtain butene-1 polymer compositions with an unexpected profile of properties.

### SUMMARY OF THE INVENTION

Thus the present disclosure provides a butene-1 polymer composition having Melt Flow Rate values of from 400 to 2000 g/10 min., preferably from 400 to 1800 g/10 min., in particular from 400 to 1600 g/10 min. or from 500 to 1600 g/10 min., measured according to ISO 1133 at 190°C with a load of 2.16 kg (hereinafter called "MFR"), comprising:

1. A) a butene-1 homopolymer or a copolymer of butene-1 with one or more comonomers selected from ethylene and propylene, having a copolymerized comonomer content ($C_A$) of up to 5% by mole, preferably up to 4% by mole;
2. B) a copolymer of butene-1 with one or more comonomers selected from ethylene and propylene, having a copolymerized comonomer content ($C_B$) of from 6% to 25% by mole, preferably from 8% to 20% by mole, more preferably from 10% to 20% by mole;

said composition having a total copolymerized comonomer content from 5% to 18% by mole, preferably from 8% to 15% by mole, referred to the sum of A) and B), and a content of fraction soluble in xylene at 0°C of 65% by weight or more, preferably of 70% by weight or more, determined on the total weight of A) and B).

The composition provided herein can be obtained directly in polymerization, without requiring the use of free radical generating agents, like peroxides, to increase the MFR value, thus avoiding the chemical contamination and unpleasant odor which results from the introduction of free radical generating agents.

### DETAILED DESCRIPTION OF THE INVENTION

Specific amounts of fraction soluble in xylene at 0°C for the butene-1 polymer composition as provided herein, expressed as the weight content of fraction measured by extraction on the total weight of A) and B), are of from 65% to 95% by weight, or from 65% to 90% by weight, in particular from 70% to 95% by weight, or from 70% to 90% by weight.

When A) is a copolymer, a specific lower limit of comonomer content is of 1% by mole.

Preferably, when both A) and B) are copolymers, the difference between the percent values of the copolymerized comonomer contents of B) and A) satisfies the following relation:

$$(C_B) - (C_A) \geq 5;$$

or

$$(C_B) - (C_A) \geq 6.$$

The relative amounts of components A) and B) can be easily determined depending upon the desired value of total copolymerized comonomer content, the comonomer contents of the single components and their content of fraction soluble in xylene at 0 °C.

Preferred amounts are from 10% to 40% by weight, in particular from 15% to 35% by weight of A) and from 90% to 60% by weight, in particular from 85% to 65% by weight of B), referred to the total weight of A) and B).

Propylene can be present as comonomer, in addition or in alternative to ethylene, in components A) and B).

However ethylene is the preferred comonomer, in particular for component B).

The present butene-1 polymer composition has a measurable crystallinity, as demonstrated by the presence, in the Differential Scanning Calorimetry (DSC) pattern, of the melting temperature peaks of crystalline butene-1 polymers.

In particular, the present butene-1 polymer composition shows one or more melting peaks in the second DSC heating scan. Such temperature peak or peaks, generally occurring at temperatures equal to or lower than 110°C, in particular from 85°C to 110°C, are attributed to the melting point of crystalline form II of the butene-1 polymers (TmII) and the area under the peak (or peaks) is taken as the global melting enthalpy (DH TmII). However, if more than one peak is present, the highest (most intense) one is taken as TmII.

Specific global DH TmII values for the present butene-1 polymer composition are of 15 J/g or less, in particular of 3 to 15 J/g, measured with a scanning speed corresponding to 10 °C/min.

Moreover, the present butene-1 polymer composition shows one or more melting peaks, generally occurring at temperatures equal to or lower than 110°C, in particular from 30°C to 110°C, in a DSC heating scan carried out after aging. Such temperature peak or peaks are attributed to the melting point crystalline form I of the butene-1 polymers (TmI) and the area under the peak (or peaks) is taken as the global melting enthalpy (DH TmI). However, if more than one peak is present, the highest (most intense) one is taken as TmI.

Specific global DH TmI values for the present butene-1 polymer composition are of 40 J/g or less, in particular of from 10 to 40 J/g, or from 15 to 40 J/g, measured with a scanning speed corresponding to 10 °C/min.

The present butene-1 polymer composition can also have a detectable content of crystalline form III. Crystalline form III is detectable via the X-ray diffraction method described in the Journal of Polymer Science Part B: Polymer Letters Volume 1, Issue 11, pages 587-591, November 1963, or Macromolecules, Vol. 35, No. 7, 2002.

Specific X-ray crystallinity values for the present butene-1 polymer composition are of from 15% to 40%, in particular from 15% to 35%.

The specific MFR values for components A) and B) can be broadly selected, provided that the said MFR values of the overall composition are obtained.

In this respect, it is well known that the logarithm of the MFR value of polyolefin blends in general, thus of blends of butene-1 polymers as well, is given by the sum of the products of the weight fraction and the logarithm of the MFR value of the single components.

Thus the MFR value of a composition made of a blend of the said components A) and B) is determined by the following relation:

$$\log \text{MFR (A+B)} = \text{wA} \log \text{MFR (A)} + \text{wB} \log \text{MFR (B)}$$

where MFR (A+B) is the MFR value for the blend of A) and B), MFR (A) and MFR (B) are the MFR values of components A) and B) respectively and wA and wB are the respective weight fractions. For instance, wA and wB are 0.4 and 0.6 when the blend is made of 40% by weight of component A) and 60% by weight of component B).

It is however preferred, in order to achieve good fluidity in the molten state, to keep the MFR values of the single components A) and B) sufficiently high, in particular in the range of from 100 to 2000 g/10 min., or from 200 to 1800 g/10 min.

In this respect it is to be considered that a specific assessment of the fluidity in the molten state for hot-melt applications, is provided by the "Brookfield viscosity", typically measured according to ASTM D 3236-73.

The present butene-1 polymer composition preferably has Brookfield viscosity of from 5,000 to 50,000 mPa·sec, at 180°C and a deformation rate of and 100 $_S^{-1}$, in particular from 5,000 to 30,000 mPa·sec.

These relatively low values of Brookfield viscosity can be achieved when the molecular weights of the butene-1 polymer composition are low enough, thus when the MFR values are correspondingly high.

Moreover, the present butene-1 polymer composition preferably has at least one of the following further features:

- a Mw/Mn value, where Mw is the weight average molar mass and Mn is the number average molar mass, both measured by GPC (Gel Permeation Chromathograpy), equal to or lower than 4, in particular lower than 3, or lower than 2.5, the lower limit being of 1.5 in all cases;
- Mw equal to or greater than 30.000, in particular from 30.000 to 100.000;
- an intrinsic viscosity (IV) measured in tetrahydronaphthalene (THN) at 135°C lower than 0.6 dl/g, in particular from 0.2 dl/g to 0.6 dl/g or from 0.3 dl/g to 0.6 dl/g;
- isotactic pentads (mmmm) measured with $^{13}$C-NMR operating at 150.91 MHz higher than 90%; in particular higher than 93% or higher than 95%;
- 4,1 insertions not detectable using a $^{13}$C-NMR operating at 150.91 MHz;
- a yellowness index equal to or lower than 0; in particular from 0 to -10 or from -1 to -9 or from
- 1 to -5;
- a Shore D value equal to or lower than 50, or equal to or lower than 45, in particular from 25 to 50 or from 25 to 45;
- a tensile stress at break, measured according to ISO 527, of from 2 MPa to 25 MPa, in particular from 2 MPa to 20 MPa;
- a tensile elongation at break, measured according to ISO 527, of from 100% to 800%; in particular from 450% to 700%;
- a glass transition temperature of -22°C or less, in particular of -23°C or less, wherein the lower limit is -35°C.
- a density of 0.895 g/cm$^3$ or less, in particular of 0.895 - 0.875 g/cm$^3$.

The butene-1 polymer components A) and B) can be obtained by polymerizing the monomer(s) in the presence of a metallocene catalyst system obtainable by contacting:

- a stereorigid metallocene compound;
- an alumoxane or a compound capable of forming an alkyl metallocene cation; and, optionally,
- an organo aluminum compound.

Preferably the stereorigid metallocene compound belongs to the following formula (I):

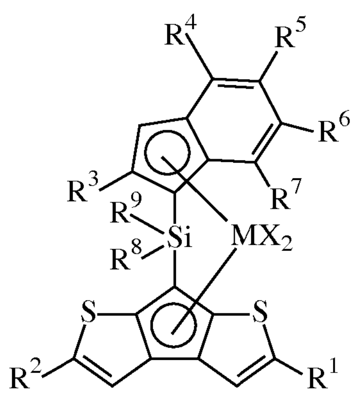

wherein:

M is an atom of a transition metal selected from those belonging to group 4; preferably M is zirconium;

X, equal to or different from each other, is a hydrogen atom, a halogen atom, a R, OR, OR'O, $OSO_2CF_3$, OCOR, SR, $NR_2$ or $PR_2$ group wherein R is a linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radical, optionally containing heteroatoms belonging to groups 13-17 of the Periodic Table of the Elements; and R' is a $C_1$-$C_{20}$-alkyfidene, $C_6$-$C_{20}$-arylidene, $C_7$-$C_{20}$-alkylarylidene, or $C_7$-$C_{20}$-arylalkylidene radical; preferably X is a hydrogen atom, a halogen atom, a OR'O or R group; more preferably X is chlorine or a methyl radical;

$R^1$, $R^2$, $R^5$, $R^6$, $R^7$, $R^8$ and $R^9$, equal to or different from each other, are hydrogen atoms, or linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radicals, optionally containing heteroatoms belonging to groups 13-17 of the Periodic Table of the Elements; or $R^5$ and $R^6$,

and/or $R^8$ and $R^9$ can optionally form a saturated or unsaturated, 5 or 6 membered rings, said ring can bear $C_1$-$C_{20}$ alkyl radicals as substituents; with the proviso that at least one of $R^6$ or $R^7$ is a linear or branched, saturated or unsaturated $C_1$-$C_{20}$-alkyl radical, optionally containing heteroatoms belonging to groups 13-17 of the Periodic Table of the Elements; preferably a $C_1$-$C_{10}$-alkyl radical;

$R^3$ and $R^4$, equal to or different from each other, are linear or branched, saturated or unsaturated $C_1$-$C_{20}$-alkyl radicals, optionally containing heteroatoms belonging to groups 13-17 of the Periodic Table of the Elements; preferably $R^3$ and $R^4$ equal to or different from each other are $C_1$-$C_{10}$-alkyl radicals; more preferably $R^3$ is a methyl, or ethyl radical; and $R^4$ is a methyl, ethyl or isopropyl radical.

Preferably the compounds of formula (I) have formula (Ia):

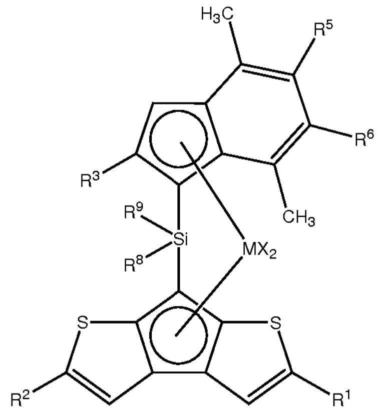

(Ia)

Wherein:

M, X, $R^1$, $R^2$, $R^5$, $R^6$, $R^8$ and $R^9$ have been described above;

$R^3$ is a linear or branched, saturated or unsaturated $C_1$-$C_{20}$-alkyl radical, optionally containing heteroatoms belonging to groups 13-17 of the Periodic Table of the Elements; preferably $R^3$ is a $C_1$-$C_{10}$-alkyl radical; more preferably $R^3$ is a methyl, or ethyl radical.

Specific examples of metallocene compounds are dimethylsilyl{(2,4,7-trimethyl-1-indenyl)-7-(2,5-dimethyl-cyclopenta[1,2-b:4,3-b']-dithiophene)} zirconium dichloride; dimethylsilanediyl{(1-(2,4,7-trimethylindenyl)-7-(2,5-dimethyl-cyclopenta[1,2-b:4,3-b']-dithiophene)}Zirconium dichloride and dimethylsilanediyl{(1-(2,4,7-trimethylindenyl)-7-(2,5-dimethyl-cyclopenta[1,2-b:4,3-b']-dithiophene)}zirconium dimethyl.

Examples of alumoxanes are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Examples of compounds able to form an alkylmetallocene cation are compounds of formula $D^+E^-$, wherein $D^+$ is a Brønsted acid, able to donate a proton and to react irreversibly with a substituent X of the metallocene of formula (I) and $E^-$ is a compatible anion, which is able to stabilize the active catalytic species originating from the reaction of the two compounds, and which is sufficiently labile to be able to be removed by an olefinic monomer. Preferably, the anion $E^-$comprises of one or more boron atoms.

Examples organo aluminum compound are trimethylaluminum (TMA), triisobutylaluminium (TIBA), tris(2,4,4-trimethyl-pentyl)aluminum (TIOA), tris(2,3-dimethylbutyl)aluminium (TDMBA) and tris(2,3,3-trimethylbutyl)aluminum (TTMBA).

Examples of the said catalyst system and of polymerization processes employing such catalyst system can be found in WO2004099269 and WO2009000637.

By operating under known polymerization conditions in the presence of the above described catalysts, the two components A) and B) of the present butene-1 polymer composition can be prepared separately and then blended together in the molten state by using known polymer processing apparatuses, such as mono- and twin screw extruders.

However, as previously mentioned, the present butene-1 polymer composition can be prepared directly in polymerization.

The polymerization process for producing the composition thus comprises at least two sequential stages, carried out in two or more reactors connected in series, wherein components A) and B) are prepared in separate subsequent

stages, operating in each stage, except for the first stage, in the presence of the polymer formed and the catalyst used in the preceding stage.

Said polymerization process can be carried out in liquid phase, optionally in the presence of an inert hydrocarbon solvent, or in gas phase, using fluidized bed or mechanically agitated gas phase reactors.

The catalyst can be added in the first reactor only, or in more than one reactor.

The hydrocarbon solvent can be either aromatic (such as toluene) or aliphatic (such as propane, hexane, heptane, isobutane, cyclohexane and 2,2,4-trimethylpentane, isododecane).

Preferably, the polymerization process is carried out by using liquid butene-1 as polymerization medium. The polymerization temperature can be from 20°C to 150°C, in particular between 50°C and 90°C, for example from 65°C to 82°C.

The concentration of hydrogen in the liquid phase during the polymerization reaction (molar ppm $H_2$/ butene-1 monomer) is generally from 1800 ppm to 6000 ppm, in particular from 1900 ppm to 5500 ppm.

The amount of comonomer, in particular ethylene, in the liquid phase, when a copolymer is prepared, can be from 0.1% to 8% by weight, in particular from 0.2% to 7% by weight, with respect to the total weigh of comonomer and butene-1 monomer present in the polymerization reactor.

In particular, for the preparation of component A) the amount of comonomer can be from 0.1% to 0.9% or from 0.2% to 0.8% by weight, while it can be from 1% to 9% by weight or from 1.5% to 7% by weight for the preparation of component B).

In hot-melt adhesive applications, the present butene-1 polymer composition can be optionally blended with other materials commonly used in the relevant art.

In particular, a hot-melt adhesive polyolefin composition can comprise one or more of the following optional components, in addition to the present butene-1 polymer composition comprising the components A) and B):

I) at least one additional polymer, selected in particular from the group of amorphous poly-alpha-olefins, thermoplastic polyurethanes, ethylene/(meth)acrylate copolymers, ethylene/vinyl acetate copolymers and mixtures thereof;
II) at least one resin material different from (I) and selected from aliphatic hydrocarbon resins, terpene/phenolic resins, polyterpenes, rosins, rosin esters and derivatives thereof and mixtures thereof;
III) at least one wax or oil, selected in particular from mineral, paraffinic or naphthenic waxes or oils; and
IV) a nucleating agent.

Examples of nucleating agents are isotactic polypropylene, polyethylene, amides, like stearamides, or talc.

Preferred amounts by weight of said optional components, with respect to the total weight of the hot-melt adhesive polyolefin composition, when present and independently from each other are:

- from 0.1% to 25%, in particular from 1% to 25% by weight of I);
- from 10% to 75%, in particular from 10% to 40% by weight of II);
- from 0.1% to 50%, in particular from 1% to 30% by weight of III);
- from 0.01% to 1%, in particular from 0.1% to 1% by weight of IV).

The said components can be added and blended in the molten state with the present butene-1 polymer composition by using known polymer processing apparatuses, such as mono- and twin screw extruders.

The said hot-melt adhesive compositions can be used in several fields such as in paper and packaging industry, in furniture manufacture e.g. for edgebands, particularly square edges, and softforming applications, for paneling in high moisture environments and in the production of nonwoven articles, like disposable diapers.

EXAMPLES

Various embodiments, compositions and methods as provided herein are disclosed below in the following examples. These examples are illustrative only, and are not intended to limit the scope of the invention.

The following analytical methods are used to characterize the polymer compositions.

Thermal properties (melting temperatures and enthalpies)

Determined by Differential Scanning Calorimetry (D.S.C.) on a Perkin Elmer DSC-7 instrument, as hereinafter described.

- For the determination of TmII (the melting temperature measured in the second heating run) a weighted sample (5-10 mg) obtained from the polymerization was sealed into aluminum pans and heated at 200 °C with a scanning speed corresponding to 10 °C/minute. The sample was kept at 200 °C for 5 minutes to allow a complete melting of all the crystallites thus cancelling the thermal history of the sample. Successively, after cooling to -20 °C with a

scanning speed corresponding to 10 °C/minute, the peak temperature was taken as the crystallization temperature (Tc). After standing for 5 minutes at -20 °C, the sample was heated for the second time at 200 °C with a scanning speed corresponding to 10 °C/min. In this second heating run, the peak temperature measured was taken as (TmII). If more than one peak was present, the highest (most intense) one was taken as TmII. The area under the peak (or peaks) was taken as global melting enthalpy (DH TmII).

- The melting enthalpy and the melting temperature were also measured after aging (without cancelling the thermal history) as follows by using Differential Scanning Calorimetry (D.S.C.) on an Perkin Elmer DSC-7 instrument. A weighted sample (5-10 mg) obtained from the polymerization was sealed into aluminum pans and heated at 200°C with a scanning speed corresponding to 10 °C/minute. The sample was kept at 200 °C for 5 minutes to allow a complete melting of all the crystallites. The sample was then stored for 10 days at room temperature. After 10 days the sample was subjected to DSC, cooled to -20 °C, and then it was heated at 200°C with a scanning speed corresponding to 10°C/min. In this heating run, the peak temperature was taken as the melting temperature (TmI). If more than one peak was present, the highest (most intense) peak was taken as TmI. The area under the peak (or peaks) was taken as global melting enthalpy after 10 days (DH TmI).

MFR

Determined according to norm ISO 1133 with a load of 2.16 kg at 190 °C (standard die).

Intrinsic viscosity

Determined according to norm ASTM D 2857 in tetrahydronaphthalene at 135 °C.

Brookfield viscosity

Measured at 180°C and a deformation rate of and 100 $s^{-1}$, using a RheolabQC instrument, which is a rotational rheometer, consisting of a high-precision encoder and a dynamic EC motor. It is possible to select between controlled shear rate (CR) and controlled shear stress (CS) test settings. It is suitable for investigations on the mixing and stirring behavior of emulsions and dispersions and pastes using concentric cylinder systems, double gap systems and different vane geometries and spindles. During the test, the sample is subjected at a deformation rate sweep from 1 $s^{-1}$ to 1000 $s^{-1}$. The torque is measured for each deformation rate and the corresponding viscosity is calculated by the instrument software.

Density

The density of samples was measured according to ISO 1183-1 (ISO 1183-1 method A "Methods for determining the density of non-cellular plastics -Part 1: Immersion method, liquid pyknometer method and titration method"; Method A: Immersion method, for solid plastics (except for powders) in void-free form). Test specimens were taken from compression moulded plaques conditioned for 10 days before carrying out the density measure.

Comonomer contents

Comonomer contents were determined via FT-IR.

The spectrum of a pressed film of the polymer was recorded in absorbance vs. wavenumbers ($cm^{-1}$). The following measurements were used to calculate the ethylene content:

a) area ($A_t$) of the combination absorption bands between 4482 and 3950 $cm^{-1}$ which is used for spectrometric normalization of film thickness.

b) factor of subtraction ($FCR_{C2}$) of the digital subtraction between the spectrum of the polymer sample and the absorption band due to the sequences BEE and BEB (B: l,butene units, E: ethylene units) of the methylenic groups ($CH_2$ rocking vibration).

c) Area ($A_{C2,block}$) of the residual band after subtraction of the $C_2PB$ spectrum. It comes from the sequences EEE of the methylenic groups ($CH_2$ rocking vibration).

APPARATUS

A Fourier Transform Infrared spectrometer (FTIR) was used,which is capable of providing the spectroscopic measurements above reported.

A hydraulic press with platens heatable to 200 °C (Carver or equivalent) was used.

METHOD

Calibration of (BEB + BEE) sequences

A calibration straight line is obtained by plotting %(BEB + BEE)wt vs. $FCR_{C2}/A_t$. The slope $G_r$ and the intercept $I_r$ are calculated from a linear regression.

Calibration of EEE sequences

A calibration straight line is obtained by plotting %(EEE)wt vs. $A_{C2,block}/A_t$. The slope $G_H$ and the intercept $I_H$ are calculated from a linear regression.

Sample preparation

Using a hydraulic press, a thick sheet is obtained by pressing about g 1.5 of sample between two aluminum foils. If homogeneity is in question, a minimum of two pressing operations are recommended. A small portion is cut from this sheet to mold a film. Recommended film thickness ranges between 0.1-0.3 mm.

The pressing temperature is 140 ± 10 °C.

A crystalline phase modification takes place with time, therefore it is recommended to collect the IR spectrum of the sample film as soon as it is molded.

Procedure

The instrument data acquisition parameters are as follows:

Purge time: 30 seconds minimum.
Collect time: 3 minutes minimum.
Apodization: Happ-Genzel.
Resolution: 2 $cm^{-1}$.
Collect the IR spectrum of the sample vs. an air background.

CALCULATION

Calculate the concentration by weight of the BEE + BEB sequences of ethylene units:

$$\%(BEE + BEB)wt = G_r \cdot \frac{FCR_{C2}}{A_t} + I_r$$

Calculate the residual area (AC2,block) after the subtraction described above, using a baseline between the shoulders of the residual band.

Calculate the concentration by weight of the EEE sequences of ethylene units:

$$\%(EEE)wt = G_H \cdot \frac{A_{C2,\,block}}{A_t} + I_H$$

Calculate the total amount of ethylene percent by weight:

$$\%C2wt = \left[\%(BEE + BEB)wt + \%(EEE)wt\right]$$

NMR analysis of chain structure

$^{13}C$ NMR spectra were acquired on a Bruker AV-600 spectrometer equipped with cryo-probe, operating at 150.91 MHz in the Fourier transform mode at 120°C.

The peak of the $T_{\beta\delta}$ carbon (nomenclature according to C. J. Carman, R. A. Harrington and C. E. Wilkes, Macromolecules, 10, 3, 536 (1977)) was used as internal reference at 37.24 ppm. The samples were dissolved in 1,1,2,2-tetrachloroethane-*d*2 at 120°C with a 8 % wt/v concentration. Each spectrum was acquired with a 90° pulse, 15 seconds of delay between pulses and CPD to remove $^{1}H$-$^{13}C$ coupling. About 512 transients were stored in 32K data points using a spectral window of 9000 Hz.

The assignments of the spectra, the evaluation of triad distribution and the composition were made according to Kakugo [M. Kakugo, Y. Naito, K. Mizunuma and T. Miyatake, Macromolecules, 16, 4, 1160 (1982)] and Randall [J. C. Randall, Macromol. Chem Phys., C30, 211 (1989)] using the following:

$$BBB = 100\ (T_{\beta\beta})/S = I5$$

$$BBE = 100T_{\beta\delta}/S = I4$$

$$EBE = 100\ P_{\delta\delta}\ /S = I14$$

$$BEB = 100\ S_{\beta\beta}/S = I13$$

$$BEE = 100\ S_{\alpha\delta}/S = I7$$

$$EEE = 100(0.25\ S_{\gamma\delta}+0.5\ S_{\delta\delta})/S = 0.25\ I9+ 0.5I10$$

| Area | Chemical Shift | Assignments | Sequence |
|---|---|---|---|
| 1 | 40.40-40.14 | Sαα | BBBB |
| | 39.64 | Tδδ | EBE |
| 2 | 39-76-39.52 | Sαα | BBBE |
| 3 | 39.09 | Sαα | EBBE |
| 4 | 37.27 | Tβδ | BBE |
| 5 | 35.20-34.88 | Tββ | BBB |
| 6 | 34.88-34.49 | Say | BBEB+BEBE |
| 7 | 34.49-34.00 | Sαδ | EBEE+BBEE |
| 8 | 30.91 | Sγγ | BEEB |
| 9 | 30.42 | Sγδ | BEEE |
| 10 | 29.90 | Sδδ | EEE |
| 11 | 27.73-26.84 | Sβδ+2$B_2$ | BBB+BBE EBEE+BBEE |
| 12 | 26.70 | 2$B_2$ | EBE |
| 13 | 24.54-24.24 | Sββ | BEB |
| 14 | 11.22 | Pδδ | EBE |
| 15 | 11.05 | Pβδ | BBE |
| 16 | 10.81 | Pββ | BBB |

To a first approximation, the *mmmm* was calculated using 2B2 carbons as follows:

| Area | Chemical shift | assignments |
|---|---|---|
| B1 | 28.2 -27.45 | *mmmm* |
| B2 | 27.45 - 26.30 | |
| *mmmm* = $B_1$*100/($B_1$+$B_2$-2*$A_4$-$A_7$-$A_{14}$) | | |

Mw/Mn determination by GPC

Measured by way of Gel Permeation Chromatography (GPC) in 1,2,4-trichlorobenzene (TCB). Molecular weight parameters (Mn, Mw, Mz) and molecular weight distributions Mw/Mn for all the samples were measured by using a GPC-IR apparatus by PolymerChar, which was equipped with a column set of four PLgel Olexis mixed-bed (Polymer Laboratories) and an IR5 infrared detector (PolymerChar). The dimensions of the columns were 300 × 7.5 mm and their particle size was 13 $\mu$m. The mobile phase flow rate was kept at 1.0 mL/min. All the measurements were carried out at 150 °C. Solution concentrations were 2.0 mg/mL (at 150 °C) and 0.3 g/L of 2,6-diterbuthyl-p-chresole were added to prevent degradation. For GPC calculation, a universal calibration curve was obtained using 12 polystyrene (PS) standard samples supplied by PolymerChar (peak molecular weights ranging from 266 to 1220000). A third-order polynomial fit was used for interpolate the experimental data and obtain the relevant calibration curve. Data acquisition and processing was done by using Empower 3 (Waters). The Mark-Houwink relationship was used to determine the molecular weight distribution and the relevant average molecular weights: the K values were $K_{PS} = 1.21 \times 10^{-4}$ dL/g and $K_{PB} = 1.78 \times 10^{-4}$ dL/g for PS and polybutene (PB) respectively, while the Mark-Houwink exponents $\alpha = 0.706$ for PS and $\alpha = 0.725$ for PB were used.

For butene/ethylene copolymers, as far as the data evaluation is concerned, it was assumed for each sample that the composition was constant in the whole range of molecular weight and the K value of the Mark-Houwink relationship was calculated using a linear combination as reported below:

$$K_{EB} = x_E K_{PE} + x_B K_{PB}$$

where $K_{EB}$ is the constant of the copolymer, $K_{PE}$ ($4.06 \times 10^{-4}$, dL/g) and $K_{PB}$ ($1.78 \times 10^{-4}$ dL/g) are the constants of polyethylene (PE) and PB, $x_E$ and $x_B$ are the ethylene and the butene weight relative amount with $x_E + x_B = 1$. The Mark-Houwink exponents $\alpha = 0.725$ was used for all the butene/ethylene copolymers independently on their composition. End processing data treatment was fixed for all samples to include fractions up at 1000 in terms of molecular weight equivalent. Fractions below 1000 were investigated via GC.

Fractions soluble and insoluble in xylene at 0°C (XS-0°C)

2.5 g of polymer composition and 250 $cm^3$ of o-xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then cooled to 100°C in air for 10 to 15 minute under stirring and then kept for 30 minutes in thermostatic water bath at 0 °C for 60 minutes as well . The so formed solid is filtered on quick filtering paper at 0°C. 100 $cm^3$ of the filtered liquid is poured in a previously weighed aluminum container which is heated on a heating plate under nitrogen flow, to remove the solvent by evaporation. Thus, one calculates the percent by weight of polymer soluble (Xylene Solubles at 0°C = XS 0°C) from the average weight of the residues. The insoluble fraction in o-xylene at 0°C (xylene Insolubles at 0°C = XI%0°C) is:

$$XI\%0°C=100-XS\%0°C.$$

Determination of X-ray crystallinity

The X-ray crystallinity was measured with an X-ray Diffraction Powder Diffractometer (XDPD) that uses the Cu-K$\alpha$1 radiation with fixed slits and able to collect spectra between diffraction angle 2$\Theta$ = 5° and 2$\Theta$ = 35° with step of 0.1° every 6 seconds.

The samples are diskettes of about 1.5-2.5 mm of thickness and 2.5-4.0 cm of diameter made by compression moulding. The diskettes are aged at room temperature (23°C) for 96 hours.

After this preparation the specimen is inserted in the XDPD sample holder. The XRPD instrument set in order to collect the XRPD spectrum of the sample from diffraction angle 2Θ = 5° to 2Θ = 35° with steps of 0.1° by using counting time of 6 seconds, and at the end the final spectrum is collected.

Defining Ta as the total area between the spectrum profile and the baseline expressed in counts/sec·2Θ and Aa as the total amorphous area expressed in counts/sec·2Θ. Ca is total crystalline area expressed in counts/sec·2Θ.

The spectrum or diffraction pattern is analyzed in the following steps:

1) define a suitable linear baseline for the whole spectrum and calculate the total area (Ta) between the spectrum profile and the baseline;
2) define a suitable amorphous profile, along the whole spectrum, that separate , the amorphous regions from the crystalline ones according to the two phase model;
3) calculate the amorphous area (Aa) as the area between the amorphous profile and the baseline;
4) calculate the crystalline area (Ca) as the area between the spectrum profile and the amorphous profile as Ca = Ta- Aa
5) Calculate the degree of crystallinity (%Cr) of the sample using the formula:

$$\%Cr = 100 \text{ x } Ca / Ta$$

Shore D

According to norm ISO 868, measured 10 days after molding.

Tensile stress and elongation at break

According to norm ISO 527 on compression molded plaques, measured 10 days after molding.

Glass transition temperature via DMTA (Dynamic Mechanical Thermal Analysis) Molded specimens of 76 mm by 13 mm by 1 mm are fixed to the DMTA machine for tensile stress. The frequency of the tension and relies of the sample is fixed at 1 Hz. The DMTA translates the elastic response of the specimen starting from -100 °C to 130 °C. In this way it is possible to plot the elastic response versus temperature. The elastic modulus for a viscoelastic material is defined as E=E'+iE". The DMTA can split the two components E' and E" by their resonance and plot E' vs temperature and E'/E" = tan (δ) vs temperature.

The glass transition temperature Tg is assumed to be the temperature at the maximum of the curve E'/E" = tan (δ) vs temperature.

Yellowness index

Determined accordingly to ASTM D1925.

Example 1 and Comparative Example 1

Preparation of the metallocene catalyst (A-1)

Dimethylsilyl{(2,4,7-trimethyl-1-indenyl)-7-(2,5-dimethyl-cyclopenta[1,2-b:4,3-b']-dithiophene)} zirconium dichloride (A-1) was prepared according to Example 32 of WO0147939.

Preparation of the catalytic solution

Under nitrogen atmosphere, 8.1 L of a solution of 4.5 %wt/v of TIBA in isododecane (1.84 mol of TIBA) and 760 mL of a solution 30 %wt/wt of MAO in toluene (3.65 moles of MAO) were loaded in a 20 L jacketed glass reactor equipped with an anchor stirrer and allowed to react at room temperature for about 1 hour under stirring.

After this time, the metallocene A-1 (1.6 g, 2.75 mmol) was added and dissolved under stirring for about 30 minutes.

The final solution was discharged from the reactor into a cylinder through a filter to remove solid residues (if any).

The composition of the solution is as follows:

| A1 g/L | Zr %w | Al/Zr mol ratio | Metalloce ne Conc. mg/L |
|---|---|---|---|
| 16.7 | 0.028 | 1996 | 181 |

**Polymerization Example 1 and Comparative Example** 1

The polymerization was carried out continuously in a pilot plant comprising two stirred reactors connected in series in which liquid butene-1 constituted the liquid medium.

The catalytic solution was fed in both reactors.

Comparative Example 1 was carried out by using one reactor only.

The polymerization conditions are reported in Table 1.

Table 1

| | Ex. 1 | Comp. 1 |
|---|---|---|
| Operative conditions (first reactor) | | |
| Temperature (°C) | 75 | 75 |
| $H_2$ in liquid phase (ppm mol) | 2600 | 2600 |
| $C_2H_4$ in liquid phase (weight%) | - | 1.44 |
| Mileage (kg/gMe) | 1953 | 2500 |
| Split (weight%) | 22 | - |
| $C_2H_4$ content of A) (weight%) | 0 | - |
| | | |
| Operative conditions (second reactor) | | |
| Temperature (°C) | 75 | - |
| $H_2$ in liquid phase (ppm mol) | 2600 | - |
| $C_2H_4$ in liquid phase (weight%) | 4.3 | - |
| Split (weight%) | 78 | - |
| $C_2H_4$ content of B) (weight%) | 6.8 | - |
| $C_2H_4$ content of B) (mole%) | 12.7 | - |
| | | |
| Total mileage | 1722 | 2500 |
| Total $C_2H_4$ content (weight%) | 5.3 | 4.3 |
| Total $C_2H_4$ content (mole%) | 10.1 | 8.2 |
| Note: kg/gMe = kilograms of polymer per gram of metallocene catalyst (A-1); Split = amount of polymer produced in the concerned reactor. | | |

In Table 2 the properties of the final products are specified.

Table 2

| | | Ex. 1 | Comp. 1 |
|---|---|---|---|
| MFR 190° 2.16Kg - ISO 1133 | g/10min | 610 | 630 |
| Intrinsic Viscosity (THN) | dl/g | 0.49 | 0.49 |
| $C_2H_4$ IR | % | 5.3 | 4.3 |
| TmII | °C | 98.1 | 64.2 |
| DH TmII | J/g | 8.7 | 4.1 |

(continued)

| | | Ex. 1 | Comp. 1 |
|---|---|---|---|
| Tml | °C | 96 | 64 |
| DH Tml | J/g | 35.4 | 33 |
| Tc | °C | N.D. | N.D. |
| X - Ray crystallinity | % | 26 | 31 |
| 13C-NMR (mmmm) | % | 96.8 | 97.22 |
| Xylene Soluble at 0°C | % | 80 | 99.9 |
| Mw | g/mol | 64200 | 66100 |
| Mn | g/mol | 29000 | 29200 |
| Brookfield viscosity at 180°C | mPa·sec | 18000 | 17000 |
| Density | $g/cm^3$ | 0.8900 | 0.8926 |
| Strength at Break | MPa | 10 | 10 |
| Elongation at Break | % | 560 | 403 |
| Hardness Shore D | D | 32 | 36.2 |
| Glass transition temperature | °C | -25.8 | -21.6 |
| Yellowness Index | NR | -1 | +2 |
| Note: N.D. = Not Detectable | | | |

## Claims

**1.** A butene-1 polymer composition having MFR values of from 400 to 2000 g/10 min., measured according to ISO 1133 at 190°C with a load of 2.16 kg, comprising:

A) a butene-1 homopolymer or a copolymer of butene-1 with one or more comonomers selected from ethylene and propylene, having a copolymerized comonomer content ($C_A$) of up to 5% by mole;
B) a copolymer of butene-1 with one or more comonomers selected from ethylene and propylene, having a copolymerized comonomer content ($C_B$) of from 6% to 25% by mole;

said composition having a total copolymerized comonomer content from 5% to 18% by mole, referred to the sum of A) and B), and a content of fraction soluble in xylene at 0°C of 65% by weight or more, determined on the total weight of A) and B).

**2.** The butene-1 polymer composition of claim 1, comprising from 10% to 40% by weight of A) and from 90% to 60% by weight of B), referred to the total weight of A) and B).

**3.** The butene-1 polymer composition of claim 1, having DH TmII values of from 3 to 15 J/g, measured by Differential Scanning Calorimetry in the second heating run by heating at 200°C, keeping at 200 °C for 5 minutes, cooling to -20°C, standing for 5 minutes at - 20 °C and heating for the second time to 200°C, with a scanning speed corresponding to 10°C/min.

**4.** The butene-1 polymer composition of claim 1, having a Brookfield viscosity of from 5,000 to 50,000 mPa·sec, measured at 180°C and a deformation rate of and 100 $s^{-1}$.

**5.** The butene-1 polymer composition of claim 1, having a Mw/Mn value, where Mw is the weight average molar mass and Mn is the number average molar mass, both measured by GPC, equal to or lower than 4.

**6.** The butene-1 polymer composition of claim 1, having a Mw value equal to or greater than 30,000.

7. The butene-1 polymer composition of claim 1, having a glass transition temperature of - 22°C or less.

8. The butene-1 polymer composition of claim 1, having a yellowness index lower than 0.

9. A process for preparing the butene-1 polymer composition of claim 1, comprising at least two sequential stages, carried out in two or more reactors connected in series, wherein components A) and B) are prepared in separate subsequent stages, operating in each stage, except the first stage, in the presence of the polymer formed and the catalyst used in the preceding stage.

10. The process of claim 9, carried out in the presence of a metallocene catalyst obtainable by contacting:

- a stereorigid metallocene compound;
- an alumoxane or a compound capable of forming an alkyl metallocene cation; and, optionally,
- an organo aluminum compound.

11. A hot-melt adhesive compositions consisting of or comprising the butene-1 polymer composition of claim 1 or 2.

## Patentansprüche

1. Buten-1-Polymerzusammensetzung mit MFR-Werten von 400 bis 2000 g/10 min., gemessen gemäß ISO 1133 bei 190 °C mit einer Last von 2,16 kg, umfassend:

A) ein Buten-1-Homopolymer oder ein Copolymer von Buten-1 mit einem oder mehreren Comonomeren ausgewählt aus Ethylen und Propylen, das einen Gehalt an copolymerisiertem Comonomer ($C_A$) von bis zu 5 Mol.% aufweist;
B) ein Copolymer von Buten-1 mit einem oder mehreren Comonomeren ausgewählt aus Ethylen und Propylen, das einen Gehalt an copolymerisiertem Comonomer ($C_B$) von 6 Mol.% bis 25 Mol.% aufweist;

wobei die Zusammensetzung einen Gesamtgehalt an copolymerisiertem Comonomer von 5 Mol.% bis 18 Mol.% hat, bezogen auf die Summe von A) und B), sowie einen Gehalt einer in Xylol bei 0 °C löslichen Fraktion von 65 Gew.% oder mehr, bestimmt bezogen auf das Gesamtgewicht von A) und B).

2. Buten-1-Polymerzusammensetzung nach Anspruch 1, umfassend 10 Gew.% bis 40 Gew.% A) und 90 Gew.% bis 60 Gew.% B), bezogen auf das Gesamtgewicht von A) und B).

3. Buten-1-Polymerzusammensetzung nach Anspruch 1 mit DH TmII-Werten von 3 bis 15 J/g, gemessen mittels Differentialscanningkalorimetrie im zweiten Heizdurchlauf durch Heizen auf 200 °C, Halten auf 200 °C für 5 Minuten, Abkühlen auf -20 °C, Ruhenlassen für 5 Minuten bei -20 °C und zweitem Heizen auf 200 °C mit einer Scangeschwindigkeit, die 10 °C/Minute entspricht.

4. Buten-1-Polymerzusammensetzung nach Anspruch 1 mit einer Brookfield-Viskosität von 5000 bis 50.000 mP·as, gemessen bei 180 °C und mit einer Verformungsrate von 100 $s^{-1}$.

5. Buten-1-Polymerzusammensetzung nach Anspruch 1 mit einem Wert für Mw/Mn gleich oder kleiner als 4, wobei Mw das durchschnittliche Molekulargewicht (Gewichtsmittel) ist und Mn das durchschnittliche Molekulargewicht (Zahlenmittel) ist und beide mittels GPC gemessen werden.

6. Buten-1-Polymerzusammensetzung nach Anspruch 1 mit einem Wert für Mw gleich oder kleiner als 30.000.

7. Buten-1-Polymerzusammensetzung nach Anspruch 1 mit einer Glasübergangstemperatur von -22 °C oder weniger.

8. Buten-1-Polymerzusammensetzung nach Anspruch 1 mit einem Vergilbungsindex kleiner als 0.

9. Verfahren zur Herstellung der Buten-1-Polymerzusammensetzung nach Anspruch 1, umfassend mindestens zwei sequentielle Stufen, die in zwei oder mehr Reaktoren durchgeführt werden, die in Reihe verbunden sind, wobei Komponenten A) und B) in separaten, aufeinander folgenden Stufen hergestellt werden, wobei in jeder Stufe mit Ausnahme der ersten Stufe in Gegenwart von Polymer, das in der vorhergehenden Stufe gebildet wurde, und

Katalysator, der in der vorhergehenden Stufe verwendet wurde, gearbeitet wird.

**10.** Verfahren nach Anspruch 9, das in Gegenwart eines Metallocenkatalysators durchgeführt wird, der erhältlich ist durch Kontaktieren von:

- einer stereorigiden Metallocenverbindung;
- einem Alumoxan oder einer Verbindung, die in der Lage ist, ein Alkylmetallocen-Kation zu bilden; und gegebenenfalls
- einer Organoaluminiumverbindung.

**11.** Heißschmelzklebstoffzusammensetzungen, die aus der Buten-1 -Polymerzusammensetzung nach Anspruch 1 oder 2 bestehen oder diese umfassen.

## Revendications

**1.** Composition de polymère de butène-1 présentant des valeurs de MFR de 400 à 2000 g/10 min, mesurées selon la norme ISO 1133 à 190 °C sous une charge de 2,16 kg, comprenant : A) un homopolymère de butène-1 ou un copolymère de butène-1 avec un ou plusieurs comonomère(s) choisi(s) parmi l'éthylène et le propylène, présentant une teneur en comonomère(s) copolymérisé(s) ($C_A$) de jusqu'à 5 % en mole ;

B) un copolymère de butène-1 avec un ou plusieurs comonomère(s) choisi(s) parmi l'éthylène et le propylène, présentant une teneur en comonomère(s) copolymérisé(s) ($C_B$) de 6 % à 25 % en mole ;
ladite composition présentant une teneur totale en comonomère(s) copolymérisé(s) de 5 % à 18 % en mole, par rapport à la somme de A) et de B), et une teneur en fraction soluble dans le xylène à 0 °C de 65 % en poids ou plus, déterminée sur le poids total de A) et de B).

**2.** Composition de polymère de butène-1 selon la revendication 1, comprenant 10 % à 40 % en poids de A) et 90 % à 60 % en poids de B), par rapport au poids total de A) et de B).

**3.** Composition de polymère de butène-1 selon la revendication 1, présentant des valeurs de DH TmII de 3 à 15 J/g, mesurées par calorimétrie différentielle à balayage dans le deuxième cycle de chauffage par chauffage à 200 °C, maintien à 200 °C pendant 5 minutes, refroidissement à -20 °C, repos pendant 5 minutes à -20 °C et chauffage pendant la seconde durée à 200 °C, à une vitesse de balayage correspondant à 10 °C/min.

**4.** Composition de polymère de butène-1 selon la revendication 1, présentant une viscosité Brookfield de 5000 à 50.000 mPa.s, mesurée à 180 °C et à un taux de déformation de 100 $s^{-1}$.

**5.** Composition de polymère de butène-1 selon la revendication 1, présentant une valeur de Mw/Mn, où Mw représente la masse molaire moyenne en poids et Mn représente la masse molaire moyenne en nombre, toutes deux mesurées par CPG, égale ou inférieure à 4.

**6.** Composition de polymère de butène-1 selon la revendication 1, présentant une valeur de Mw égale ou supérieure à 30.000.

**7.** Composition de polymère de butène-1 selon la revendication 1, présentant une température de transition vitreuse de -22 °C ou moins.

**8.** Composition de polymère de butène-1 selon la revendication 1, présentant un indice de jaunissement inférieur à 0.

**9.** Procédé de préparation de la composition de polymère de butène-1 selon la revendication 1, comprenant au moins deux étapes séquentielles, effectuées dans deux réacteurs ou plus reliés en série, les constituants A) et B) étant préparés dans des étapes ultérieures séparées, fonctionnant dans chaque étape, à l'exception de la première étape, en présence du polymère formé et du catalyseur utilisé dans l'étape précédente.

**10.** Procédé selon la revendication 9, mis en œuvre en présence d'un catalyseur de type métallocène pouvant être obtenu par mise en contact de :

- un composé de type métallocène stéréorigide ;
- un aluminoxane ou un composé en mesure de former un cation de type alkylmétallocène ; et éventuellement
- un composé d'organo-aluminium.

**11.** Composition adhésive thermofusible constituée par ou comprenant la composition de polymère de butène-1 selon la revendication 1 ou 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4833192 A
- EP 0314495 A2
- EP 0331410 A2
- EP 1477499 A1
- WO 2006045687 A
- WO 2015074830 A
- WO 2004099269 A
- WO 2009000637 A
- WO 0147939 A


### Non-patent literature cited in the description


- *Journal of Polymer Science Part B: Polymer Letters,* November 1963, vol. 1 (11), 587-591
- *Macromolecules,* 2002, vol. 35 (7
- **C. J. CARMAN ; R. A. HARRINGTON ; C. E. WILKES.** *Macromolecules,* 1977, vol. 10 (3), 536
- **M. KAKUGO ; Y. NAITO ; K. MIZUNUMA ; T. MIYATAKE.** *Macromolecules,* 1982, vol. 16 (4), 1160
- **J. C. RANDALL.** *Macromol. Chem Phys.,* 1989, vol. C30, 211